# EUROPEAN PATENT APPLICATION

(11) **EP 4 460 069 A1**
(43) Date of publication of application: **06.11.2024**
(21) Application number: 22914490.2
(22) Date of filing: 22.12.2022
(51) Int. Cl.: H04W 24/00

(54) **BWP SWITCHING METHOD AND APPARATUS, AND TERMINAL**

(30) Priority: 28.12.2021 CN 202111627146
(71) Applicant: Vivo Mobile Communication Co., Ltd., Dongguan, Guangdong 523863 (CN)
(72) Inventor: CHEN, Li, Dongguan, Guangdong 523863 (CN); WANG, Lihui, Dongguan, Guangdong 523863 (CN); PAN, Xueming, Dongguan, Guangdong 523863 (CN)
(74) Representative: Lavoix
(86) International application number: PCT/CN2022/141051
(87) International publication number: WO 2023/125236

(57) **Abstract**

The present application discloses a BWP switching method and apparatus, and a terminal, and relates to the field of communication technologies. The BWP switching method in embodiments of the present application includes: in a case that a first preset condition is met, performing, by a terminal, a predetermined operation in a second BWP, or switching from a first BWP to the second BWP, where the first BWP is an initial BWP, and the second BWP is a separate initial BWP; and the performing a predetermined operation includes at least one of the following: receiving a system message; receiving or monitoring a paging message; receiving or monitoring an advance indication signal; performing a random access process; performing radio resource management RRM measurement; performing radio link monitoring RLM and/or beam failure detection BFD; and performing cell selection or reselection.

## Description

### CROSS-REFERENCE TO RELATED APPLICATIONS

This application claims priority to Chinese Patent Application No. 202111627146.5 filed on December 28, 2021, which is incorporated herein by reference in its entirety.

### TECHNICAL FIELD

The present application belongs to the field of communication technologies, and specifically relates to a BWP switching method and apparatus, and a terminal.

### BACKGROUND

In related technologies, for a terminal in an idle state and an inactive state, in order to receive a system message, a paging message, and the like, the terminal remains in an initial downlink bandwidth part (initial DL BWP, that is, a first BWP) to perform BWP switching, and cell selection and reselection, receive the system message, the paging message, and the like, and complete initial random access in an initial BWP.

However, when a system is configured with a separate initial BWP (that is, a second BWP) including a non-cell defining synchronization signal and PBCH block (Non-Cell Defining Synchronization Signal and PBCH block, NCD SSB), if the terminal continues to remain in an initial bandwidth part (initial Bandwidth Part, initial BWP) including a cell defining synchronization signal and PBCH block (Cell Defining Synchronization Signal and PBCH block, CD SSB) to perform the foregoing operations, offload (offload) cannot be alleviated as the system expects, or a bandwidth of the initial BWP exceeds a capability of the current terminal, or a large number of terminals with limited functions (redcap UE) may affect a normal terminal.

If the terminal simply resides in the separate initial BWP including the NCD SSB, and the foregoing operations continue to remain in the initial BWP including the CD SSB, the terminal needs to frequently perform radio frequency retuning (Radio Frequency retuning, RF retuning) between the initial BWP and the separate initial BWP (separate initial BWP). In this way, power consumption of the terminal increases, a probability of service interruption increases, and system performance decreases.

### SUMMARY

Embodiments of the present application provide a BWP switching method and apparatus, and a terminal, which can reduce power consumption of the terminal and improve performance of a communication system.

According to a first aspect, a BWP switching method is provided. The method includes:
in a case that a first preset condition is met, performing, by a terminal, a predetermined operation in a second BWP, or switching from a first BWP to the second BWP, where
the first BWP is an initial BWP, and the second BWP is a separate initial BWP; and
the performing a predetermined operation includes at least one of the following:
   receiving a system message;
   receiving or monitoring a paging message;
   receiving or monitoring an advance indication signal;
   performing a random access process;
   performing radio resource management RRM measurement;
   performing radio link monitoring RLM and/or beam failure detection BFD; and
   performing cell selection or reselection.

According to a second aspect, a BWP switching apparatus is provided. The apparatus includes:
a processing module, configured to, in a case that a first preset condition is met, perform a predetermined operation in a second BWP, or switch from a first BWP to the second BWP, where
the first BWP is an initial BWP, and the second BWP is a separate initial BWP; and
the performing a predetermined operation includes at least one of the following:
   receiving a system message;
   receiving or monitoring a paging message;
   receiving or monitoring an advance indication signal;
   performing a random access process;
   performing radio resource management RRM measurement;
   performing radio link monitoring RLM and/or beam failure detection BFD; and
   performing cell selection or reselection.

According to a third aspect, a terminal is provided. The terminal includes a processor and a memory. The memory stores a program or instructions running on the processor. The program or the instructions, when executed by the processor, implement steps of the method according to the first aspect.

According to a fourth aspect, a terminal is provided. The terminal includes a processor and a communication interface. The processor is configured to in a case that a first preset condition is met, perform a predetermined operation in a second BWP, or switch from a first BWP to the second BWP, where
the first BWP is an initial BWP, and the second BWP is a separate initial BWP; and
the performing a predetermined operation includes at least one of the following:
   receiving a system message;
   receiving or monitoring a paging message;
   receiving or monitoring an advance indication signal;
   performing a random access process;
   performing radio resource management RRM measurement;
   performing radio link monitoring RLM and/or beam failure detection BFD; and
   performing cell selection or reselection.

According to a fifth aspect, a readable storage medium is provided. The readable storage medium stores a program or instructions. The program or the instructions, when executed by a processor, implement steps of the method according to the first aspect.

According to a sixth aspect, a chip is provided. The chip includes a processor and a communication interface. The communication interface is coupled to the processor. The processor is configured to run a program or instructions, to implement the method according to the first aspect.

According to a seventh aspect, a computer program product is provided. The computer program product is stored in a storage medium. The computer program product is executed by at least one processor to implement steps of the BWP switching method according to the first aspect.

According to an eighth aspect, a communication device is provided and configured to implement steps of the BWP switching method according to the first aspect.

In the embodiments of the present application, when the first preset condition is met, the terminal performs the predetermined operation in the second BWP or switches from the first BWP to the second BWP, so that not all terminals perform the predetermined operation in the first BWP, but some terminals are scattered to perform the predetermined operation in the second BWP. This can achieve load balancing on a network side. In addition, a RedCap terminal can perform the predetermined operation in the second BWP. This can avoid the impact of a large number of RedCap terminals on a normal terminal (the terminal that performs the predetermined operation in the first BWP). In addition, only when the first preset condition is met, switching from the first BWP to the second BWP can avoid frequent radio frequency retuning of the terminal between the first BWP and the second BWP, reduce power consumption of the terminal, reduce a probability of service interruption, and avoid a system performance decrease.

### BRIEF DESCRIPTION OF THE DRAWINGS

FIG. 1 is a block diagram of a wireless communication system to which an embodiment of the present application can be applied;
FIG. 2A to FIG. 2D are schematic diagrams of locations of a CD SSB and an NCD SSB;
FIG. 3 is a schematic flowchart of a BWP switching method according to an embodiment of the present application;
FIG. 4 is a schematic structural diagram of a BWP switching apparatus according to an embodiment of the present application;
FIG. 5 is a schematic structural diagram of a communication device according to an embodiment of the present application; and
FIG. 6 is a schematic structural diagram of a terminal according to an embodiment of the present application.

### DETAILED DESCRIPTION

The following clearly describes the technical solutions in embodiments of the present application with reference to the accompanying drawings in embodiments of the present application. Apparently, the described embodiments are some embodiments of the present application rather than all embodiments. All other embodiments obtained by a person of ordinary skill in the art based on embodiments of the present application fall within the protection scope of the present application.

The specification and claims of the present application, and terms "first" and "second" are used to distinguish similar objects, but are unnecessarily used to describe a specific sequence or order. It should be understood that the terms in such a way are interchangeable in proper circumstances, so that embodiments of the present application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in embodiments of the present application are not limited to a long term evolution (Long Term Evolution, LTE) system or an LTE-advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency division multiple access (Single-carrier Frequency Division Multiple Access, SC-FDMA). The terms "system" and "network" in embodiments of the present application are often used interchangeably, and the described technology can be used not only for the above systems and radio technologies, but also for other systems and radio technologies. The following description describes a new radio (New Radio, NR) system for example objectives, and NR terms are used in most of the description below. These technologies are also applicable to applications other than NR system applications, such as a 6th generation (6th Generation, 6G) communication system.

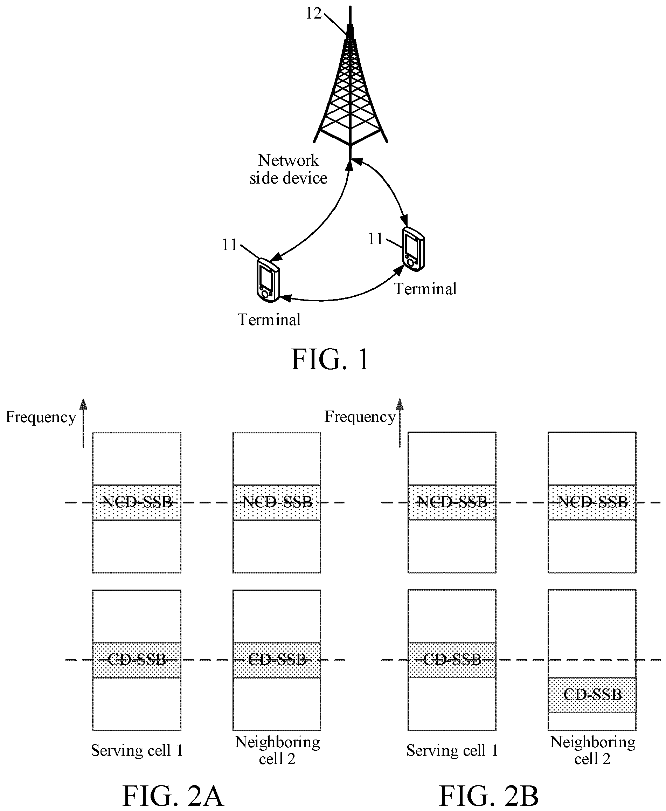

FIG. 1 is a block diagram of a wireless communication system to which an embodiment of the present application can be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart appliance (an appliance device with a wireless communication function, such as a refrigerator, a TV, a washing machine, or furniture), a game console, a personal computer (personal computer, PC), a teller machine, or a self-service machine. The wearable device includes: a smart watch, a smart bracelet, smart earphones, smart glasses, smart jewelry (a smart bangle, a smart bracelet, a smart ring, a smart necklace, and a smart anklet), a smart wristband, smart clothing, and the like. It should be noted that a specific type of the terminal 11 is not limited in embodiments of the present application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, or a wireless fidelity (Wireless Fidelity, Wi-Fi) node. The base station may be referred to as a NodeB, an evolution NodeB (eNB), an access point, a base transceiver station (Base Transceiver Station, BTS), a radio base station, a radio transceiver, a basic service set (Basic Service Set, BSS), an extended service set (Extended Service Set, ESS), a household B node, a household evolutionary B node, a transmission reception point (Transmission Reception Point, TRP), or some other suitable terms in the field, provided that the same technical effect is achieved, the base station is not limited to a particular technical term. It should be noted that, in embodiments of the present application, only a base station in the NR system is taken as an example, but a specific type of the base station is not limited.

In NR, a terminal performs one or more of the following operations in an initial downlink bandwidth part (initial DL BWP, also referred to as a first downlink bandwidth part) of a cell: receiving a synchronization signal block, performing uplink sending in a random access process (in a corresponding initial uplink BWP (initial UL BWP)), performing downlink reception, and receiving system information and paging information. The terminal performs BWP switching and cell reselection judgment of radio resource management (Radio Resource Management, RRM) based on a cell defining SSB (cell defining SSB, CD SSB, also referred to as a first SSB in this specification) in the initial downlink BWP.

A separate initial DL BWP (also referred to as a second downlink BWP in this specification) can be configured for some terminals (for example, some types of terminals, such as a redcap UE), the terminal can perform the foregoing sending and receiving behaviors in the separate BWP. The separate BWP and the first downlink BWP may be completely staggered, or partially overlap, or have an inclusive relationship in frequency domain. Since the terminal needs to obtain downlink synchronization, BWP switching, automatic gain control (Automatic Gain Control, AGC), and other operations based on the SSB, if the separate initial DL BWP does not include the SSB, the terminal may need to frequently perform radio frequency retuning (RF retuning), that is, need to frequently return from the separate initial DL BWP to a bandwidth of the first downlink BWP for SSB reception. This may increase power consumption of the terminal, increase a probability of service interruption, and decrease system performance. Therefore, one SSB (also referred to as a second SSB in this specification, where the second SSB is the NCD SSB, namely, non-cell defining synchronization signal and PBCH block) is included in the second downlink BWP, so that the power consumption of the terminal for sending and receiving in the BWP may be reduced. The second SSB is usually an NCD SSB, that is, the SSB does not include an indication of system information receiving configuration.

The terminal may determine a location and a frequency of the second SSB in the second downlink BWP based on system information in the first downlink BWP or high-level signaling, and configure the terminal to perform RRMBWP switching on a frequency of the second SSB. The BWP switching may be intra-frequency (intra-frequency) BWP switching, including BWP switching of a serving cell and BWP switching of an intra-frequency neighboring cell. Based on a BWP switching result, it is determined whether to enable neighboring cell BWP switching or whether to perform neighboring cell reselection on this frequency.

Before the terminal performs intra-frequency BWP switching and inter-frequency BWP switching, the BWP switching of a serving cell is first performed. When the BWP switching result (including reference signal received power (Reference Signal Received Power, RSRP) and/or reference signal received quality (Reference Signal Received Quality, RSRQ)) of the serving cell is higher than a threshold, the terminal may not perform intra-frequency or inter-frequency BWP switching.

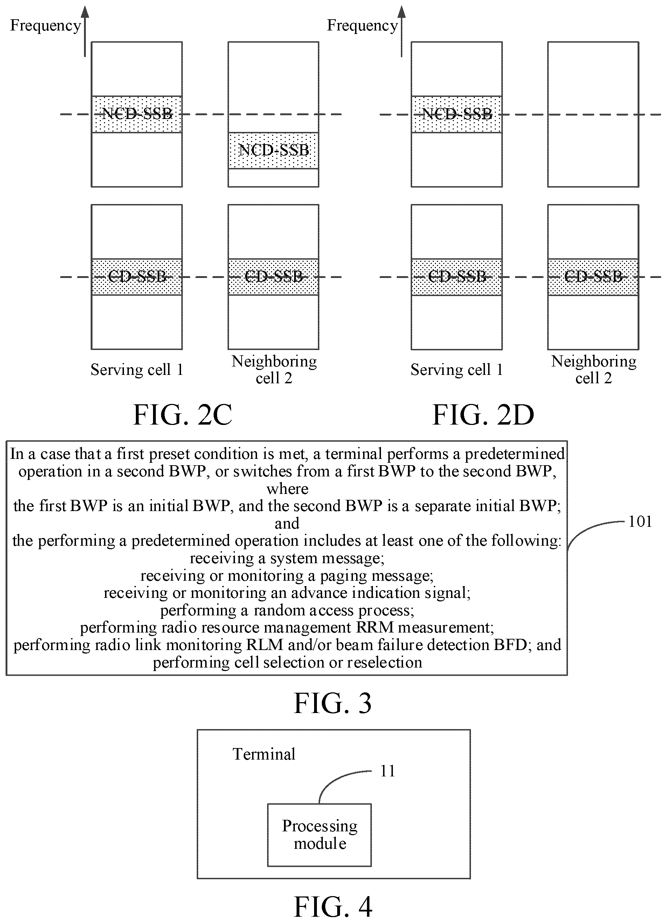

As shown in FIG. 2A to FIG. 2D, locations of CD SSBs and NCD SSBs deployed by a network are flexible. There is not necessarily a deployment of the neighboring cell on the frequency of the CD SSB or the NCD SSB. As shown in FIG. 2A, frequency locations of the CD SSBs and the NCD SSBs of two cells are the same; as shown in FIG. 2B, frequencies of the NCD SSBs of two cells are the same, but frequencies of the CD SSBs are different; as shown in FIG. 2C and FIG. 2D, frequency locations of the CD SSBs of two cells are the same, but the frequency locations of the NCD SSBs are different, or there is no NCD SSB in a second cell.

A physical cell identifier (Physical Cell Identifier, PCI) of the SSBs at different frequency locations of the same cell/carrier deployed by the network may be the same or different. Network deployment has greater flexibility, and the PCI is carried by a synchronization signal in the SSB

However, if PCIs of two different frequencies are different, as shown in FIG. 2A, even if the terminal knows the frequency location of the CD SSB of the second cell, without an additional information indication, the terminal cannot know a PCI of the first SSB associated with the second SSB with better signal quality that the BWP switches to. That is, the terminal does not know a PCI of a target reselection cell. In this case, the terminal may be unable to quickly perform reselection and/or reside in a target cell.

In addition, transmit power and frame/slot/symbol timing of the SSBs at different frequency locations may be different. Without knowing the information, the terminal may not be able to accurately perform BWP switching or quickly complete cell reselection.

In NR, the network may deploy the CD SSBs to some preset frequencies, and the terminal searches for a synchronization signal block on these frequencies.

The NCD SSB may be sent after being deployed on a frequency corresponding to a sync raster (sync raster), or may be sent on a frequency of a non-sync raster. When the NCD SSB is on the sync raster, information in a physical broadcast channel (Physical broadcast channel, PBCH) indicates the following information, including one of the following:
within a preset frequency range, there is no CD SSB; and
a frequency of a nearest CD SSB.

If the NCD SSB is deployed on the sync raster, this is not an optimal deployment, because the terminal may discover the cell through search, but cannot directly obtain system information on this frequency to access the cell. This deployment increases a cell search delay of the terminal.

A more optimal deployment is to deploy the NCD SSB on a frequency outside the sync raster. In this case, the (part of) information indicated by the PBCH in the SSB is currently meaningless. Therefore, it can be considered to use indication information of the PBCH in this deployment mode to assist the terminal in determining BWP switching and reselection behaviors.

Regarding cell selection and reselection:
1. In an initial cell selection process (the UE does not know in advance which radio frequency channel (RF channel) is a carrier of NR), the UE scans (scans) all RF channels one by one according to its own capabilities (a scanning sequence is not specified in the protocol), to find a suitable (suitable) NR cell; at each scanned carrier frequency, the UE only needs to search for a cell with strongest signal quality; and once the suitable cell is found, the cell is selected for residing and the initial cell selection process is stopped, in other words, the RF channels that have not been scanned do not need to be scanned any more.

The suitable cell at least meets all of the following conditions:
signal quality of the cell meets a preset condition; the signal quality includes: RSRP and/or RSRQ;
the UE may obtain necessary system information (at least including a master information block (Master Information Block, MIB) and a system information block 1 (System Information Block 1, SIB 1)); and
a cell bar (cell bar) information element (Information element, IE) in the system information (which can take the value of cell barred (barred) and cell not barred (notBarred)) is set to notBarred, that is, the cell is not prohibited from attaching or accessing.

### 2. Cell reselection process

The UE sequentially evaluates whether each frequency has a suitable target cell for reselection based on a frequency priority order starting from a high-priority frequency provided by the network. Only the suitable cell can be used as a target cell for reselection.

Different frequencies can be configured with the same or different frequency priorities.

### Specifically,

when the UE resides in a serving cell, if there is a cell with a higher priority at an NR or LTE frequency that meets: cell signal quality Squal within a period of time Treselection_{RAT} > threshold value Thresh_{X, HighQ}, or if there is a cell with a higher priority at an NR frequency or other RAT frequencies that meets: signal strength Srxlev within a period of time Treselection_{RAT} > threshold value Threshx, HighP, and the UE has resided in the current serving cell for more than one second, a process of reselecting a cell with a higher priority at an NR frequency or other radio access technologies (Radio Access Technologies, RATs) is initiated.

In LTE and NR systems, an idle state protocol defines configurations related to BWP switching in an idle state and an inactive state and a BWP switching trigger condition of a neighboring cell, and further defines a configuration related to BWP switching in a connected state and a condition for BWP switching reporting.

In a case that whether to perform BWP switching on an intra-frequency neighboring cell for the purpose of cell selection and reselection is determined, when the serving cell meets Srxlev > SIntraSearchP and Squal > SIntraSearchQ, the UE chooses not to perform BWP switching of the intra-frequency neighboring cell. Otherwise, if it is lower than the threshold, BWP switching of the intra-frequency neighboring cell needs to be performed.

For inter-frequency and Inter-RAT scenarios, when the priority is higher than the current serving frequency and the radio access technology (RAT), the terminal performs BWP switching of the neighboring cell based on BWP switching requirements defined in the protocol. When the priority is equal to or lower than the current serving frequency and the RAT, and when the serving cell meets Srxlev > SnonIntraSearchP and Squal > SnonIntraSearchQ, the UE chooses not to perform BWP switching of the neighboring cell. Otherwise, if it is lower than the threshold, BWP switching of the neighboring cell needs to be performed.

The foregoing neighboring cell BWP switching threshold is optionally configurable on the network side. When not configured, the threshold is defined in the protocol. When the BWP switching result of the current cell does not meet an S criterion for a plurality of times successively, BWP switching of the neighboring cell is triggered.

When in the connected state, the terminal determines whether a BWP switching result (RSRP or RSRQ) of a special cell (Special Cell, SpCell) and a configured S-measure (S-measure) related threshold (s-MeasureConfig) meet the condition. If the BWP switching result is lower than the configured threshold, the terminal calculates and reports the BWP switching result based on the BWP switching configuration and the BWP switching reporting configuration. Therefore, when the BWP switching result is higher than the threshold, there is no need to perform corresponding BWP switching and BWP switching reporting.

The BWP switching method provided in embodiments of the present application is described in detail below through some embodiments and application scenarios thereof with reference to the accompanying drawings.

An embodiment of the present application provides a BWP switching method. As shown in FIG. 3, the method includes:
Step 101: In a case that a first preset condition is met, a terminal performs a predetermined operation in a second BWP, or switches from a first BWP to the second BWP, where
the first BWP is an initial BWP, and the second BWP is a separate initial BWP; and
the performing a predetermined operation includes at least one of the following:
receiving a system message, where the system message includes at least one of a MIB and a SIB;
receiving or monitoring a paging message, where the paging message includes at least one of the following: a paging message PDSCH, a physical downlink control channel (Physical Downlink Control Channel, PDCCH) corresponding to the paging message, an advance indication message (such as a permanent equipment identifier (PEI, Permanent Equipment Identifier), a wake-up signal (WUS, Wake-up Signal), a DCP (a DCI using an energy-saving RNTI for CRC scrambling), and the like), and a short message (that is, indicating terminal system information changes or emergency message notifications);
receiving or monitoring an advance indication signal;
performing a random access process, including: sending at least one of msg.1, msg.3, msg.5, and msg.A in a second UL BWP; and/or receiving at least one of msg.2, msg.4, and msg.B in a second DL BWP;
performing radio resource management RRM measurement, including: RRM measurement of a current cell, RRM measurement of an intra-frequency neighboring cell, and RRM measurement of an inter-frequency and/or inter-system neighboring cell, specifically including: a measurement process, measurement judgment, and measurement reporting, where the measurement process is measurement of an NCD SSB in the second BWP; the measurement judgment is to determine, based on measurement performance of the NCD SSB in the second BWP, whether to turn on measurement, whether to relax measurement, whether to perform measurement enhancement, and whether to perform measurement reporting; and the measurement reporting is to report the measurement performance of the NCD SSB in the second BWP;
performing radio link monitoring RLM and/or beam failure detection BFD, including determining in-Sync (in-Sync, IS) and out-of-sync (Out-of-sync, OOS) in a radio link monitoring (Radio Link Monitoring, RLM) process through the measurement of the NCD SSB in the second BWP, or by using a beam failure instance (beam failure instance, BFI) in a beam failure detection (Beam Failure Detection, BFD) process; and
performing cell selection or reselection, including: determining cell selection or reselection through the measurement of the NCD SSB in the second BWP, which includes the measurement of the current cell and the measurement of the neighboring cell.

In the embodiments of the present application, when the first preset condition is met, the terminal performs the predetermined operation in the second BWP or switches from the first BWP to the second BWP, so that not all terminals perform the predetermined operation in the first BWP, but some terminals are scattered to perform the predetermined operation in the second BWP. This can achieve load balancing on a network side. In addition, a RedCap terminal can perform the predetermined operation in the second BWP. This can avoid the impact of a large number of RedCap terminals on a normal terminal (the terminal that performs the predetermined operation in the first BWP). In addition, only when the first preset condition is met, switching from the first BWP to the second BWP can avoid frequent radio frequency retuning of the terminal between the first BWP and the second BWP, reduce power consumption of the terminal, reduce a probability of service interruption, and avoid a system performance decrease.

In this embodiment, the first BWP is an initial BWP (initial BWP), including a first SSB. The second BWP is a separate initial BWP (separate initial BWP), including a second SSB. The second BWP is different from the first BWP.

The BWP (including the first BWP and the second BWP) includes at least one of the following: an uplink UL BWP and a downlink DL BWP.

The first SSB is a CD-SSB. A PBCH in the CD-SSB includes received related configuration information indicating the system information, and/or a sending frequency location of the CD-SSB is at a frequency location corresponding to the Sync raster.

The second SSB is an NCD SSB. A PBCH in the NCD SSB does not include received configuration information indicating the system information, and/or a sending frequency location of the NCD SSB is not at a frequency location corresponding to the Sync raster.

In some embodiments, before the terminal performs the predetermined operation in the second BWP, or switches from the first BWP to the second BWP, the method further includes:
receiving, by the terminal, configuration information of a non-cell defining synchronization signal and PBCH block NCD SSB of the second BWP from a network side device. After the configuration information of the NCD SSB is received, the terminal is configured to measure the NCD SSB by using the configuration information, and subsequent actions (the terminal performs the predetermined operation in the second BWP or switches from the first BWP to the second BWP) all need to be completed by measuring the NCD SSB.

In some embodiments, before the terminal performs the predetermined operation in the second BWP, the method further includes:
performing the predetermined operation in the first BWP. In this way, after the predetermined operation is performed in the first BWP, the predetermined operation is performed in the second BWP or the second BWP is switched to. This can ensure that the predetermined operation can be performed smoothly. Even if the switching to the second BWP is not successful, the predetermined operation is already performed in the first BWP.

In some embodiments, the first preset condition includes at least one of the following:
the configuration information of the NCD SSB or the second BWP is received from a first network side device, when the terminal receives the configuration information of the NCD SSB or the second BWP of the first network side device, the predetermined operation is performed in the second BWP, or the first network side device switches from the first BWP to the second BWP. In this way, some terminals or terminal behaviors are switched to the second BWP. This can effectively perform load balancing on the network side, or reduce the impact on existing terminals in the first BWP;
a bandwidth of the first BWP exceeds a bandwidth of the terminal, where the bandwidth of the terminal includes at least one of the following: a bandwidth supported by the terminal; a channel bandwidth of the terminal; and a BWP bandwidth supported by the terminal; and the bandwidth of the first BWP includes at least one of the following: a bandwidth, a minimum bandwidth, or a maximum bandwidth configured for the first BWP; a system bandwidth configured for the first BWP; and a channel bandwidth configured for the first BWP. In this way, a situation in which the terminal cannot access the network can be avoided;
a carrier bandwidth, a channel bandwidth, or a system bandwidth exceeds the bandwidth of the terminal, where the bandwidth of the terminal includes at least one of the following: a bandwidth supported by the terminal; a channel bandwidth of the terminal; and a BWP bandwidth supported by the terminal; and the carrier bandwidth, the channel bandwidth, or the system bandwidth is configured by the network side device or agreed on in a protocol. In this way, a situation in which the terminal cannot access the network can be avoided;
a bandwidth of the second BWP is less than or equal to the bandwidth of the terminal, where the bandwidth of the terminal includes at least one of the following: a bandwidth supported by the terminal; a channel bandwidth of the terminal; and a BWP bandwidth supported by the terminal; and the bandwidth of the second BWP includes at least one of the following: a bandwidth, a minimum bandwidth, or a maximum bandwidth configured for the second BWP; a system bandwidth configured for the second BWP; and a channel bandwidth configured for the second BWP. In this way, some terminals or terminal behaviors may be switched to the second BWP. This can effectively perform load balancing on the network side, or reduce the impact on existing terminals in the first BWP;
measurement performance of the first BWP is lower than or equal to a first preset threshold, and the first preset threshold may be configured by the network side device or agreed on in a protocol. In this way, when the quality of the first BWP is poor, the terminal can switch to the second BWP to perform the predetermined operation or switch to the second BWP, ensuring the system performance. The measurement performance of the first BWP is measurement performance of a reference signal (CD SSB) in the first BWP. In this way, the performance of the corresponding behavior in the second BWP of the terminal can be effectively ensured, thereby avoiding impact of the low measurement performance of the first BWP on the terminal performance;
measurement performance of the second BWP is higher than or equal to a second preset threshold, and the second preset threshold may be configured by the network side device or agreed on in a protocol. In this way, when the quality of the second BWP is good, the terminal can switch to the second BWP to perform the predetermined operation or switch to the second BWP, thereby effectively performing load balancing on the network side, or reducing the impact on existing terminals in the first BWP to ensure the system performance. The measurement performance of the second BWP is measurement performance of a reference signal (NCD SSB) in the second BWP;
measurement performance of the terminal in a current cell is higher than a third preset threshold, and the third preset threshold may be configured by the network side device or agreed on in a protocol. In this way, when the channel quality in the current cell is good, the terminal can switch to the second BWP to perform the predetermined operation or switch to the second BWP, and some terminals switch to the second BWP or terminal behaviors are switched to the second BWP. This can effectively perform load balancing on the network side, or reduce the impact on existing terminals in the first BWP to ensure the system performance; and
measurement performance of the terminal in a neighboring cell is lower than a fourth preset threshold, and the fourth preset threshold may be configured by the network side device or agreed on in a protocol. In this way, when the channel quality of the neighboring cell is poor, the terminal can switch to the second BWP to perform the predetermined operation or switch to the second BWP, ensuring the system performance. The neighboring cell includes at least one of the following: an intra-frequency neighboring cell, an inter-frequency neighboring cell, and an inter-system neighboring cell. To be specific, when the measurement performance of the neighboring cell is not good enough, some terminals switch to the second BWP or terminal behaviors are switched to the second BWP. This can effectively perform load balancing on the network side, or reduce the impact on existing terminals in the first BWP.

The terminal is in a center of the cell or not at an edge of the cell. In this way, when the terminal is close to or located in the center of the cell, the terminal can switch to the second BWP to perform the predetermined operation or switch to the second BWP. This can achieve load balancing on the network side, or reduce the impact on existing terminals in the first BWP.

The terminal meets an S-measure mechanism. In this way, some terminals switch to the second BWP or terminal behaviors are switched to the second BWP. This can effectively perform load balancing on the network side, or reduce the impact on existing terminals in the first BWP. A condition that meets the S-measure mechanism may be: the measurement performance of the current cell is greater than a twentieth preset threshold, and the twentieth preset threshold may be configured by the network side device or agreed on in a protocol.

The terminal does not enable neighboring cell measurement, and the neighboring cell includes at least one of the following: an intra-frequency neighboring cell, an inter-frequency neighboring cell, and an inter-system neighboring cell. In this way, some terminals or terminal behaviors are switched to the second BWP. This can effectively perform load balancing on the network side, or reduce the impact on existing terminals in the first BWP.

A second network side device sends the NCD SSB in the second BWP, and the second network side device is a network side device corresponding to the neighboring cell. The neighboring cells include some neighboring cells and all neighboring cells. The terminal may receive the NCD SSB sent by the second network side device, or receive a message indicating the second network side device to send the NCD SSB in the second BWP.

The terminal performs cell selection or reselection. In this way, some terminals or terminal behaviors are switched to the second BWP. This can effectively perform load balancing on the network side, or reduce the impact on existing terminals in the first BWP.

The terminal is in low mobility or a stationary state. In this way, some terminals or terminal behaviors are switched to the second BWP. This can effectively perform load balancing on the network side, or reduce the impact on existing terminals in the first BWP.

A random number corresponding to the terminal is within a preset range, that is, a preset proportion of terminals perform the predetermined operation in the second BWP or switch from the first BWP to the second BWP, thereby achieving load balancing on the network side. The preset range is a range determined through the preset proportion. If the preset proportion is X%, the corresponding terminals generate a random number of 0-1. If the random number is less than or equal to X%, the random number corresponding to the terminals belongs to the preset range; and if the random number generated by the terminal is greater than or equal to X%, the random number corresponding to the terminal does not belong to the preset range, that is, the load control on the network side is implemented according to a specific proportion.

A specific reference signal exists in the second BWP, and the specific reference signal includes: an NCD SSB. For example, when the second BWP has reference signals such as an SSB, a channel state information resource indicator (Channel State Information Resource Indicator, CSI-RS), a sounding reference signal (Sounding Reference Signal, SRS), or a demodulation reference signal (Demodulation Reference Signal, DMRS), some terminals switch to the second BWP or the behaviors of the terminals are switched to the second BWP. This can effectively perform load balancing on the network side, or reduce the impact on existing terminals in the first BWP.

A first indication of the first network side device is received.

In some embodiments, the method further includes:
receiving a third indication of the first network side device, where the third indication indicates the first preset condition. After receiving the third indication of the first network side device, the terminal performs the predetermined operation or switches from the first BWP to the second BWP. The first network side device may issue the third indication according to the system load, indicating the terminal to perform the predetermined operation in the second BWP to achieve load balancing. In addition, the first network side device may further issue the third indication to a RedCap terminal to avoid the impact of a large number of RedCap terminals on normal terminals (terminals that perform the predetermined operation in the first BWP).

In some embodiments, the first indication indicates at least one of the following:
the terminal performs the predetermined operation in the second BWP, or switches from the first BWP to the second BWP;
the second BWP can be used for performing the predetermined operation or switching from the first BWP to the second BWP;
a load of the current cell or the first BWP is higher than a fifth preset threshold, and the fifth preset threshold may be configured by the network side device or agreed on in a protocol. In this way, when the load of the first BWP or the current cell is high, the terminal can switch to the second BWP to perform the predetermined operation or switch to the second BWP to achieve load balancing. The current cell or the first BWP does not support the type of the terminal. In this way, in order to ensure that the terminal can access the current cell, switch to the second BWP to perform the predetermined operation or switch to the second BWP to ensure performing of the predetermined operation, the type of the terminal may include a RedCap terminal, a single receive antenna terminal, and a narrowband terminal. The terminal performs cell selection or reselection based on measurement performance of the NCD SSB of the second BWP;
the terminal performs cell selection or reselection based on the measurement performance of the NCD SSB of the second BWP and measurement performance of a cell defining synchronization signal and PBCH block CD SSB of the first BWP;
the R criterion used by the terminal to perform selection or reselection based on the measurement performance of the NCD SSB of the second BWP;
the S criterion used by the terminal to perform selection or reselection based on the measurement performance of the NCD SSB of the second BWP; and
the measurement performance of the current cell is determined based on the measurement performance of the NCD SSB of the second BWP, or the measurement performance of the NCD SSB of the second BWP can represent the measurement performance of the current cell, or the measurement performance of the NCD SSB of the second BWP can replace the measurement performance of the CD SSB of the first BWP.

It should be noted that the R criterion for cell reselection is to rank the measurement performance of the neighboring cell, or the measurement performance of the current cell and the neighboring cell, and select a cell with the best measurement performance as a target cell. The measurement performance of the NCD SSB of the second BWP is used as the measurement performance of the corresponding cell.

The S criterion for cell selection and reselection may include: the measurement performance of the target cell is higher than a preset threshold 1; or the measurement performance of the target cell is higher than a preset threshold 1, and the measurement performance of the current cell is lower than a preset threshold 2. The preset threshold 1 and the preset threshold 2 may be determined based on actual requirements. The measurement performance of the NCD SSB of the second BWP is used as the measurement performance of the corresponding cell.

In some embodiments, that the terminal is in low mobility or a stationary state includes at least one of the following:
a measurement performance change amount of the terminal in the current cell is less than a sixth preset threshold or a first reference threshold, and the first reference threshold is a reference threshold of the serving cell;
a beam measurement change amount of the terminal in the current cell is less than a seventh preset threshold or a second reference threshold, and the second reference threshold is a reference threshold of the serving cell; and
a number of beams whose beam measurement change amount of the terminal in the current cell is greater than the seventh preset threshold is less than an eighth preset threshold, where
the sixth preset threshold, the seventh preset threshold, and the eighth preset threshold may be configured by the network side device or agreed on in a protocol.

In some embodiments, in a case that the terminal is in a connected state, the first indication is sent through a radio resource control (Radio Resource Control, RRC) message; and

in a case that the terminal is in an idle state or an inactive state, the first indication is sent through at least one of the following messages: the broadcast system message, the paging message, the paging advance indication message, and the dedicated RRC message, where the paging message includes a physical downlink shared channel (Physical Downlink Shared Channel, PDSCH) and/or a downlink control information (Downlink Control Information, DCI) corresponding to a physical downlink control channel (Physical Downlink Control Channel, PDCCH), and the dedicated RRC message includes an RRC release (release) message, an RRC suspend (suspend) message, and an RRC reject (reject) message.

In some embodiments, the configuration information of the NCD SSB or the second BWP includes at least one of the following:
transmit power information of the NCD SSB, including a transmit power of the NCD SSB and/or a transmit power difference between the NCD SSB and the CD SSB;
time domain information of the NCD SSB, including a time domain location of the NCD SSB and/or time synchronization information of the NCD SSB and the CD SSB;
frequency domain information of the NCD SSB, including a frequency domain location of the NCD SSB and/or a frequency domain location difference between the NCD SSB and the CD SSB;
a quasi-co-location relationship between the NCD SSB and the CD SSB; and
a measurement periodicity and a length SSB measurement timing configuration (SSB Measurement Timing Configuration, SMTC) corresponding to the NCD SSB.

In some embodiments, the method further includes:
in a case that a second preset condition is met, performing the predetermined operation in the first BWP, or switching from the second BWP to the first BWP.

In the embodiments of the present application, when the second preset condition is met, the terminal performs the predetermined operation in the first BWP or switches from the second BWP to the first BWP, so that not all terminals perform the predetermined operation in the second BWP, but some terminals are scattered to perform the predetermined operation in the first BWP. This can achieve load balancing on a network side. In addition, only when the second preset condition is met, switching from the second BWP to the first BWP can avoid frequent radio frequency retuning of the terminal between the first BWP and the second BWP, reduce power consumption of the terminal, reduce a probability of service interruption, and avoid a system performance decrease.

In some embodiments, the second preset condition includes at least one of the following:
the configuration information of the NCD SSB or the second BWP is not received from the first network side device, and when the terminal does not receive the configuration information of the NCD SSB or the second BWP of the first network side device, the predetermined operation is performed in the first BWP, or the first network side device switches from the second BWP to the first BWP; and
a bandwidth of the first BWP does not exceed a bandwidth of the terminal, where the bandwidth of the terminal includes at least one of the following: a bandwidth supported by the terminal; a channel bandwidth of the terminal; and a BWP bandwidth supported by the terminal; the bandwidth of the second BWP includes at least one of the following: a bandwidth, a minimum bandwidth, or a maximum bandwidth configured for the first BWP; a system bandwidth configured for the first BWP; and a channel bandwidth configured for the first BWP;
a carrier bandwidth, a channel bandwidth, or a system bandwidth does not exceed the bandwidth of the terminal, where the bandwidth of the terminal includes at least one of the following: a bandwidth supported by the terminal; a channel bandwidth of the terminal; and a BWP bandwidth supported by the terminal; and the carrier bandwidth, the channel bandwidth, or the system bandwidth is configured by the network side device or agreed on in a protocol; and
a bandwidth of the first BWP is less than or equal to the bandwidth of the terminal, where the bandwidth of the terminal includes at least one of the following: a bandwidth supported by the terminal; a channel bandwidth of the terminal; and a BWP bandwidth supported by the terminal; and the bandwidth of the second BWP includes at least one of the following: a bandwidth, a minimum bandwidth, or a maximum bandwidth configured for the second BWP; a system bandwidth configured for the second BWP; and a channel bandwidth configured for the second BWP;
the measurement performance of the second BWP is lower than or equal to a ninth preset threshold, and the ninth preset threshold may be configured by the network side device or agreed on in a protocol. In this way, when the quality of the second BWP is poor, the terminal can switch to the first BWP to perform the predetermined operation or switch to the first BWP, ensuring the system performance. The measurement performance of the second BWP is measurement performance of a reference signal (NCD SSB) in the second BWP;
the measurement performance of the first BWP is higher than or equal to a tenth preset threshold, and the tenth preset threshold may be configured by the network side device or agreed on in a protocol. In this way, when the quality of the first BWP is good, the terminal can switch to the first BWP to perform the predetermined operation or switch to the first BWP, ensuring the system performance. The measurement performance of the first BWP is measurement performance of a reference signal (CD SSB) in the first BWP;
the measurement performance of the terminal in the current cell is lower than an eleventh preset threshold, and the eleventh preset threshold may be configured by the network side device or agreed on in a protocol. In this way, when the channel quality of the current cell is poor, the terminal can switch to the first BWP to perform the predetermined operation or switch to the first BWP, ensuring the system performance;
the measurement performance of the terminal in the neighboring cell is higher than a twelfth preset threshold, and the twelfth preset threshold may be configured by the network side device or agreed on in a protocol. In this way, when the channel quality of the neighboring cell is good, the terminal can switch to the first BWP to perform the predetermined operation or switch to the first BWP, ensuring the system performance. The neighboring cell includes at least one of the following: an intra-frequency neighboring cell, an inter-frequency neighboring cell, and an inter-system neighboring cell;
the terminal is at the edge of the cell or not in the center of the cell. In this way, when the terminal is close to or located at the edge of the cell, the terminal can switch to the first BWP to perform the predetermined operation or switch to the first BWP, achieving load balancing on the network side;
the terminal does not meet the S-measure mechanism;
the second network side device does not send the NCD SSB in the second BWP, and the second network side device is a network side device corresponding to the neighboring cell. The neighboring cells include some neighboring cells and all neighboring cells;
the terminal enables neighboring cell measurement, and the neighboring cell includes at least one of the following: an intra-frequency neighboring cell, an inter-frequency neighboring cell, and an inter-system neighboring cell;
the terminal is not in the low mobility or the stationary state, or the terminal is in medium to high mobility;
the random number corresponding to the terminal is not within the preset range. Specifically, a preset proportion of terminals do not perform the predetermined operation in the second BWP, or switch from the second BWP to the first BWP. The preset range is a range determined through the preset proportion. If the preset proportion is X%, the corresponding terminals generate a random number of 0-1. If the random number is less than or equal to X%, the random number corresponding to the terminals belongs to the preset range; and if the random number generated by the terminal is greater than or equal to X%, the random number corresponding to the terminal does not belong to the preset range;
a specific reference signal does not exist in the second BWP, and the specific reference signal includes: an NCD SSB; and
a second indication of the first network side device is received.

In some embodiments, that the terminal is in medium to high mobility includes at least one of the following:
the measurement performance change amount of the terminal in the current cell is greater than a sixteenth preset threshold or the first reference threshold;
the beam measurement change amount of the terminal in the current cell is greater than a seventeenth preset threshold or the second reference threshold; and
a number of beams whose beam measurement change amount of the terminal in the current cell is greater than the seventeenth preset threshold is greater than an eighteenth preset threshold, where
the sixth preset threshold, the seventh preset threshold, and the eighth preset threshold may be configured by the network side device or agreed on in a protocol.

In some embodiments, the second indication indicates at least one of the following:
the terminal performs the predetermined operation in the first BWP, or switches from the second BWP to the first BWP;
the second BWP cannot be used for performing the predetermined operation or switching from the first BWP to the second BWP;
the load of the current cell or the first BWP is lower than the fifth preset threshold, and the fifth preset threshold may be configured by the network side device or agreed on in a protocol. In this way, when the load of the first BWP is low, the terminal can switch to the first BWP to perform the predetermined operation or switch to the first BWP to achieve load balancing;
the current cell or the first BWP supports the type of the terminal. In this way, switching to the first BWP to perform the predetermined operation or switching to the first BWP can ensure the performing of the predetermined operation. The type of the terminal may include a RedCap terminal, a single receive antenna terminal, and a narrowband terminal;
the terminal performs cell selection or reselection based on the measurement performance of the CD SSB of the first BWP;
the R criterion used by the terminal to perform selection or reselection based on the measurement performance of the CD SSB of the first BWP;
the S criterion used by the terminal to perform selection or reselection based on the measurement performance of the CD SSB of the first BWP; and
the measurement performance of the current cell cannot be determined based on the measurement performance of the NCD SSB of the second BWP, or the measurement performance of the NCD SSB of the second BWP cannot represent the measurement performance of the current cell, or the measurement performance of the NCD SSB of the second BWP cannot replace the measurement performance of the CD SSB of the first BWP.

In some embodiments, in a case that the terminal is in the connected state, the second indication is sent through the RRC message; and
in a case that the terminal is in the idle state or the inactive state, the second indication is sent through at least one of the following messages: the broadcast system message, the paging message, the paging advance indication message, and the dedicated RRC message. The paging message includes a downlink control information DCI corresponding to the PDSCH and/or the PDCCH, and the dedicated RRC message includes an RRC release (release) message, an RRC suspend (suspend) message, and the like.

The BWP switching method provided in this embodiment of the present application may be performed by a BWP switching apparatus. In this embodiment of the present application, an example in which the BWP switching apparatus performs the BWP switching method is used to illustrate the BWP switching apparatus provided in this embodiment of the present application.

An embodiment of the present application provides a BWP switching apparatus, as shown in FIG. 4, including:
a processing module 11, configured to in a case that a first preset condition is met, perform a predetermined operation in a second BWP, or switch from a first BWP to the second BWP, where
the first BWP is an initial BWP, and the second BWP is a separate initial BWP; and
the performing a predetermined operation includes at least one of the following:
   receiving a system message;
   receiving or monitoring a paging message;
   receiving or monitoring an advance indication signal;
   performing a random access process;
   performing radio resource management RRM measurement;
   performing radio link monitoring RLM and/or beam failure detection BFD; and
   performing cell selection or reselection.

The apparatus is used in the terminal. In the embodiments of the present application, when the first preset condition is met, the terminal performs the predetermined operation in the second BWP or switches from the first BWP to the second BWP, so that not all terminals perform the predetermined operation in the first BWP, but some terminals are scattered to perform the predetermined operation in the second BWP. This can achieve load balancing on a network side. In addition, a RedCap terminal can perform the predetermined operation in the second BWP. This can avoid the impact of a large number of RedCap terminals on a normal terminal (the terminal that performs the predetermined operation in the first BWP). In addition, only when the first preset condition is met, switching from the first BWP to the second BWP can avoid frequent radio frequency retuning of the terminal between the first BWP and the second BWP, reduce power consumption of the terminal, reduce a probability of service interruption, and avoid a system performance decrease.

In some embodiments, the apparatus further includes:
a receiving module, configured to receive, by the terminal, configuration information of a non-cell defining synchronization signal and PBCH block NCD SSB of the second BWP from a network side device.

In some embodiments, the processing module is further configured to perform the predetermined operation in the first BWP.

In some embodiments, the first preset condition includes at least one of the following:
the configuration information of the NCD SSB or the second BWP is received from a first network side device;
a bandwidth of the first BWP exceeds a bandwidth of the terminal;
a carrier bandwidth, a channel bandwidth, or a system bandwidth exceeds the bandwidth of the terminal;
a bandwidth of the second BWP is less than or equal to the bandwidth of the terminal;
measurement performance of the first BWP is lower than or equal to a first preset threshold;
measurement performance of the second BWP is higher than or equal to a second preset threshold;
measurement performance of the terminal in a current cell is higher than a third preset threshold;
measurement performance of the terminal in a neighboring cell is lower than a fourth preset threshold;
the terminal is in a center of a cell or not at an edge of a cell;
the terminal meets an S-measure mechanism;
the terminal does not enable neighboring cell measurement;
a second network side device sends the NCD SSB in the second BWP, and the second network side device is a network side device corresponding to the neighboring cell;
the terminal performs cell selection or reselection;
the terminal is in low mobility or a stationary state;
a random number corresponding to the terminal is within a preset range;
a specific reference signal exists in the second BWP; and
a first indication of the first network side device is received.

In some embodiments, the receiving module is further configured to receive a third indication of the first network side device, where the third indication indicates the first preset condition.

In some embodiments, the first indication indicates at least one of the following:
the terminal performs the predetermined operation in the second BWP, or switches from the first BWP to the second BWP;
the second BWP can be used for performing the predetermined operation or switching from the first BWP to the second BWP;
a load of the current cell or the first BWP is higher than a fifth preset threshold;
the current cell or the first BWP does not support the type of the terminal;
the terminal performs cell selection or reselection based on measurement performance of the NCD SSB of the second BWP;
the terminal performs cell selection or reselection based on the measurement performance of the NCD SSB of the second BWP and measurement performance of a cell defining synchronization signal and PBCH block CD SSB of the first BWP;
the R criterion used by the terminal to perform selection or reselection based on the measurement performance of the NCD SSB of the second BWP;
the S criterion used by the terminal to perform selection or reselection based on the measurement performance of the NCD SSB of the second BWP; and
the measurement performance of the current cell is determined based on the measurement performance of the NCD SSB of the second BWP, or the measurement performance of the NCD SSB of the second BWP can represent the measurement performance of the current cell, or the measurement performance of the NCD SSB of the second BWP can replace the measurement performance of the CD SSB of the first BWP.

In some embodiments, the bandwidth of the terminal includes at least one of the following:
a bandwidth supported by the terminal;
a channel bandwidth of the terminal; and
a BWP bandwidth supported by the terminal; and/or
the bandwidth of the first BWP includes at least one of the following:
a bandwidth, a minimum bandwidth, or a maximum bandwidth configured for the first BWP;
a system bandwidth configured for the first BWP; and
a channel bandwidth configured for the first BWP; and/or
the bandwidth of the second BWP includes at least one of the following:
a bandwidth, a minimum bandwidth, or a maximum bandwidth configured for the second BWP;
a system bandwidth configured for the second BWP; and
a channel bandwidth configured for the second BWP.

In some embodiments, the carrier bandwidth, the channel bandwidth, or the system bandwidth is configured by the network side device or agreed on in a protocol.

In some embodiments, that the terminal is in low mobility or a stationary state includes at least one of the following:
a measurement performance change amount of the terminal in the current cell is less than a sixth preset threshold or a first reference threshold;
a beam measurement change amount of the terminal in the current cell is less than a seventh preset threshold or a second reference threshold; and
a number of beams whose beam measurement change amount of the terminal in the current cell is greater than the seventh preset threshold is less than an eighth preset threshold.

In some embodiments, in a case that the terminal is in a connected state, the first indication is sent through a radio resource control RRC message; and
in a case that the terminal is in an idle state or an inactive state, the first indication is sent through at least one of the following messages: a broadcast system message, a paging message, a paging advance indication message, and a dedicated RRC message.

In some embodiments, the configuration information of the NCD SSB or the second BWP includes at least one of the following:
transmit power information of the NCD SSB, including a transmit power of the NCD SSB and/or a transmit power difference between the NCD SSB and the CD SSB;
time domain information of the NCD SSB, including a time domain location of the NCD SSB and/or time synchronization information of the NCD SSB and the CD SSB;
frequency domain information of the NCD SSB, including a frequency domain location of the NCD SSB and/or a frequency domain location difference between the NCD SSB and the CD SSB;
a quasi-co-location relationship between the NCD SSB and the CD SSB; and
a measurement periodicity and a length SMTC corresponding to the NCD SSB.

In some embodiments, the processing module is further configured to in a case that a second preset condition is met, perform the predetermined operation in the first BWP, or switch from the second BWP to the first BWP.

In some embodiments, the second preset condition includes at least one of the following:
the configuration information of the NCD SSB or the second BWP is not received from the first network side device;
the bandwidth of the first BWP does not exceed the bandwidth of the terminal;
the carrier bandwidth, the channel bandwidth, or the system bandwidth does not exceed the bandwidth of the terminal;
the bandwidth of the first BWP is less than or equal to the bandwidth of the terminal;
the measurement performance of the second BWP is lower than or equal to a ninth preset threshold;
the measurement performance of the first BWP is higher than or equal to a tenth preset threshold;
the measurement performance of the terminal in the current cell is lower than an eleventh preset threshold;
the measurement performance of the terminal in the neighboring cell is higher than a twelfth preset threshold;
the terminal is at the edge of the cell or not in the center of the cell;
the terminal does not meet the S-measure mechanism;
the second network side device does not send the NCD SSB in the second BWP, and the second network side device is a network side device corresponding to the neighboring cell;
the terminal enables the neighboring cell measurement;
the terminal is not in the low mobility or the stationary state, or the terminal is in medium to high mobility;
the random number corresponding to the terminal is not within the preset range;
the specific reference signal does not exist in the second BWP; and
a second indication of the first network side device is received.

In some embodiments, that the terminal is in medium to high mobility includes at least one of the following:
the measurement performance change amount of the terminal in the current cell is greater than a sixteenth preset threshold or the first reference threshold;
the beam measurement change amount of the terminal in the current cell is greater than a seventeenth preset threshold or the second reference threshold; and
a number of beams whose beam measurement change amount of the terminal in the current cell is greater than the seventeenth preset threshold is greater than an eighteenth preset threshold.

In some embodiments, the second indication indicates at least one of the following:
the terminal performs the predetermined operation in the first BWP, or switches from the second BWP to the first BWP;
the second BWP cannot be used for performing the predetermined operation or switching from the first BWP to the second BWP;
the load of the current cell or the first BWP is lower than the fifth preset threshold;
the current cell or the first BWP supports the type of the terminal;
the terminal performs cell selection or reselection based on the measurement performance of the CD SSB of the first BWP;
the R criterion used by the terminal to perform selection or reselection based on the measurement performance of the CD SSB of the first BWP;
the S criterion used by the terminal to perform selection or reselection based on the measurement performance of the CD SSB of the first BWP; and
the measurement performance of the current cell cannot be determined based on the measurement performance of the NCD SSB of the second BWP, or the measurement performance of the NCD SSB of the second BWP cannot represent the measurement performance of the current cell, or the measurement performance of the NCD SSB of the second BWP cannot replace the measurement performance of the CD SSB of the first BWP.

In some embodiments, in a case that the terminal is in the connected state, the second indication is sent through the RRC message; and
in a case that the terminal is in the idle state or the inactive state, the second indication is sent through at least one of the following messages: the broadcast system message, the paging message, the paging advance indication message, and the dedicated RRC message.

The BWP switching apparatus in this embodiment of the present application may be an electronic device, such as an electronic device with an operating system, or may be a component in the electronic device, such as an integrated circuit or chip. The electronic device may be a terminal or other devices other than the terminal. For example, the terminal may include, but is not limited to, the types of terminal 11 listed above, and the other devices may be a server, a network attached storage (Network Attached Storage, NAS), and the like, and embodiments of the present application are not specifically limited.

The BWP switching apparatus provided in embodiments of the present application can implement all processes implemented by the method embodiments of FIG. 3, and the same technical effects are achieved. To avoid repetition, details are not described herein again.

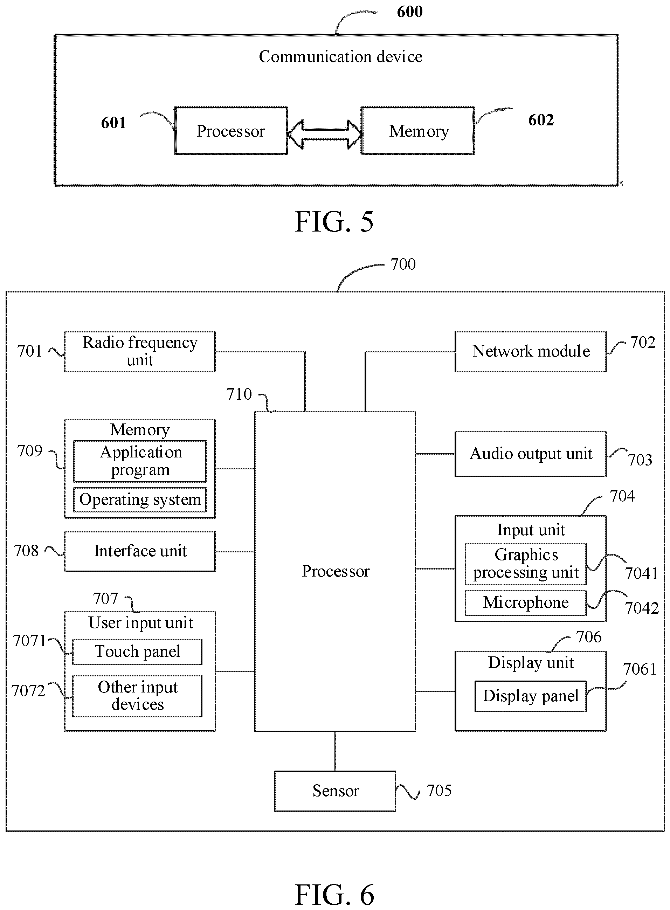

Optionally, as shown in FIG. 5, an embodiment of the present application further provides a communication device 600, including a processor 601 and a memory 602, and the memory 602 stores a program or instructions run on the processor 601. For example, when the communication device 600 is a terminal, the program or the instructions, when executed by the processor 601, implements all steps of the foregoing BWP switching method embodiments, and the same technical effects can be achieved. To avoid repetition, details are not described herein again.

An embodiment of the present application further provides a terminal. The terminal includes a processor and a memory, the memory storing a program or instructions run on the processor, the program or the instructions, when executed by the processor, implementing steps of the BWP switching method above

An embodiment of the present application further provides a terminal, including a processor and a communication interface, where the processor is configured to in a case that a first preset condition is met, perform a predetermined operation in a second BWP, or switch from a first BWP to the second BWP, where
the first BWP is an initial BWP, and the second BWP is a separate initial BWP; and
the performing a predetermined operation includes at least one of the following:
   receiving a system message;
   receiving or monitoring a paging message;
   receiving or monitoring an advance indication signal;
   performing a random access process;
   performing radio resource management RRM measurement;
   performing radio link monitoring RLM and/or beam failure detection BFD; and
   performing cell selection or reselection.

An embodiment of the present application further provides a terminal, including a processor and a communication interface. The terminal embodiment corresponds to the above terminal side method embodiment, and the various implementation processes and implementations of the above method embodiments can be applied to the terminal embodiment, and can achieve the same technical effect. Specifically, FIG. 6 is a schematic diagram of a hardware structure of a terminal that implements embodiments of the present application.

The terminal 700 includes, but is not limited to: at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 further includes a power supply (such as a battery) for supplying power to the components. The power supply may logically connect to the processor 710 by using a power supply management system, thereby implementing functions, such as charging, discharging, and power consumption management, by using the power supply management system. A terminal structure shown in FIG. 6 does not constitute a limitation to the terminal, and the terminal may include more or fewer components than those shown in the figure, or some components may be combined, or a different component deployment may be used. Details are not described herein again.

It should be understood that, in this embodiment of the present application, the input unit 704 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 706 may include a display panel 7061, for example, the display panel 7061 may be configured in a form such as a liquid crystal display or an organic light-emitting diode. The user input unit 707 includes at least one of a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, and details are not described herein again.

In this embodiment of the present application, the radio frequency unit 701 receives downlink data from a network side device and then transmits the downlink data to the processor 710 for processing. In addition, the radio frequency unit 701 may send uplink data to the network side device. Generally, the radio frequency unit 701 includes, but is not limited to, an antenna, an amplifier, a transceiver, a coupler, a low noise amplifier, a duplexer, and the like.

The memory 709 may be configured to store a software program or instructions and various data. The memory 709 may mainly include a first storage region for storing the program or the instructions and a second storage region for storing data. The first storage region may store an operating system, an application program or instructions required by at least one function (for example, a sound playback function and an image playback function), or the like. The memory 709 may include a volatile memory or a non-volatile memory, or the memory 709 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDR SDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 709 in this embodiment of the present application includes but not limited to these memories and any other suitable types of memories.

The processor 710 may include one or more processing units. Optionally, the processor 710 integrates an application processor and a modem processor. The application processor mainly processes operations related to an operating system, a user interface, and an application program. The modem processor mainly processes a wireless communication signal, such as a baseband processor. It may be understood that the modem processor may not be integrated into the processor 710.

In some embodiments, the processor 710 is configured to in a case that a first preset condition is met, perform a predetermined operation in a second BWP, or switch from a first BWP to the second BWP, where
the first BWP is an initial BWP, and the second BWP is a separate initial BWP; and
the performing a predetermined operation includes at least one of the following:
   receiving a system message;
   receiving or monitoring a paging message;
   receiving or monitoring an advance indication signal;
   performing a random access process;
   performing radio resource management RRM measurement;
   performing radio link monitoring RLM and/or beam failure detection BFD; and
   performing cell selection or reselection.

In some embodiments, the processor 710 is configured to receive configuration information of a non-cell defining synchronization signal and PBCH block NCD SSB of the second BWP from a network side device.

In some embodiments, the processor 710 is configured to perform the predetermined operation in the first BWP.

In some embodiments, the first preset condition includes at least one of the following:
the configuration information of the NCD SSB or the second BWP is received from a first network side device;
a bandwidth of the first BWP exceeds a bandwidth of the terminal;
a carrier bandwidth, a channel bandwidth, or a system bandwidth exceeds the bandwidth of the terminal;
a bandwidth of the second BWP is less than or equal to the bandwidth of the terminal;
measurement performance of the first BWP is lower than or equal to a first preset threshold;
measurement performance of the second BWP is higher than or equal to a second preset threshold;
measurement performance of the terminal in an S-measure current cell is higher than a third preset threshold;
measurement performance of the terminal in a neighboring cell is lower than a fourth preset threshold;
the terminal is in a center of a cell or not at an edge of a cell;
the terminal meets an S-measure mechanism;
the terminal does not enable neighboring cell measurement;
a second network side device sends the NCD SSB in the second BWP, and the second network side device is a network side device corresponding to the neighboring cell;
the terminal performs cell selection or reselection;
the terminal is in low mobility or a stationary state;
a random number corresponding to the terminal is within a preset range;
a specific reference signal exists in the second BWP; and
a first indication of the first network side device is received.

In some embodiments, the processor 710 is configured to receive a third indication of the first network side device, where the third indication indicates the first preset condition.

In some embodiments, the first indication indicates at least one of the following:
the terminal performs the predetermined operation in the second BWP, or switches from the first BWP to the second BWP;
the second BWP can be used for performing the predetermined operation or switching from the first BWP to the second BWP;
a load of the current cell or the first BWP is higher than a fifth preset threshold;
the current cell or the first BWP does not support the type of the terminal;
the terminal performs cell selection or reselection based on measurement performance of the NCD SSB of the second BWP;
the terminal performs cell selection or reselection based on the measurement performance of the NCD SSB of the second BWP and measurement performance of a cell defining synchronization signal and PBCH block CD SSB of the first BWP;
the R criterion used by the terminal to perform selection or reselection based on the measurement performance of the NCD SSB of the second BWP;
the S criterion used by the terminal to perform selection or reselection based on the measurement performance of the NCD SSB of the second BWP; and
the measurement performance of the current cell is determined based on the measurement performance of the NCD SSB of the second BWP, or the measurement performance of the NCD SSB of the second BWP can represent the measurement performance of the current cell, or the measurement performance of the NCD SSB of the second BWP can replace the measurement performance of the CD SSB of the first BWP.

In some embodiments, the bandwidth of the terminal includes at least one of the following:
a bandwidth supported by the terminal;
a channel bandwidth of the terminal; and
a BWP bandwidth supported by the terminal; and/or
the bandwidth of the first BWP includes at least one of the following:
a bandwidth, a minimum bandwidth, or a maximum bandwidth configured for the first BWP;
a system bandwidth configured for the first BWP; and
a channel bandwidth configured for the first BWP; and/or
the bandwidth of the second BWP includes at least one of the following:
a bandwidth, a minimum bandwidth, or a maximum bandwidth configured for the second BWP;
a system bandwidth configured for the second BWP; and
a channel bandwidth configured for the second BWP.

In some embodiments, the carrier bandwidth, the channel bandwidth, or the system bandwidth is configured by the network side device or agreed on in a protocol.

In some embodiments, that the terminal is in low mobility or a stationary state includes at least one of the following:
a measurement performance change amount of the terminal in the current cell is less than a sixth preset threshold or a first reference threshold;
a beam measurement change amount of the terminal in the current cell is less than a seventh preset threshold or a second reference threshold; and
a number of beams whose beam measurement change amount of the terminal in the current cell is greater than the seventh preset threshold is less than an eighth preset threshold.

In some embodiments, in a case that the terminal is in a connected state, the first indication is sent through a radio resource control RRC message; and
in a case that the terminal is in an idle state or an inactive state, the first indication is sent through at least one of the following messages: a broadcast system message, a paging message, a paging advance indication message, and a dedicated RRC message.

In some embodiments, the configuration information of the NCD SSB or the second BWP includes at least one of the following:
transmit power information of the NCD SSB, including a transmit power of the NCD SSB and/or a transmit power difference between the NCD SSB and the CD SSB;
time domain information of the NCD SSB, including a time domain location of the NCD SSB and/or time synchronization information of the NCD SSB and the CD SSB;
frequency domain information of the NCD SSB, including a frequency domain location of the NCD SSB and/or a frequency domain location difference between the NCD SSB and the CD SSB;
a quasi-co-location relationship between the NCD SSB and the CD SSB; and
a measurement periodicity and a length SMTC corresponding to the NCD SSB.

In some embodiments, the processor 710 is configured to in a case that a second preset condition is met, perform the predetermined operation in the first BWP, or switch from the second BWP to the first BWP.

In some embodiments, the second preset condition includes at least one of the following:
the configuration information of the NCD SSB or the second BWP is not received from the first network side device;
the bandwidth of the first BWP does not exceed the bandwidth of the terminal;
the carrier bandwidth, the channel bandwidth, or the system bandwidth does not exceed the bandwidth of the terminal;
the bandwidth of the first BWP is less than or equal to the bandwidth of the terminal;
the measurement performance of the second BWP is lower than or equal to a ninth preset threshold;
the measurement performance of the first BWP is higher than or equal to a tenth preset threshold;
the measurement performance of the terminal in the current cell is lower than an eleventh preset threshold;
the measurement performance of the terminal in the neighboring cell is higher than a twelfth preset threshold;
the terminal is at the edge of the cell or not in the center of the cell;
the terminal does not meet the S-measure mechanism;
the second network side device does not send the NCD SSB in the second BWP, and the second network side device is a network side device corresponding to the neighboring cell;
the terminal enables the neighboring cell measurement;
the terminal is not in the low mobility or the stationary state, or the terminal is in medium to high mobility;
the random number corresponding to the terminal is not within the preset range;
the specific reference signal does not exist in the second BWP; and
a second indication of the first network side device is received.

In some embodiments, that the terminal is in medium to high mobility includes at least one of the following:
the measurement performance change amount of the terminal in the current cell is greater than a sixteenth preset threshold or the first reference threshold;
the beam measurement change amount of the terminal in the current cell is greater than a seventeenth preset threshold or the second reference threshold; and
a number of beams whose beam measurement change amount of the terminal in the current cell is greater than the seventeenth preset threshold is greater than an eighteenth preset threshold.

In some embodiments, the second indication indicates at least one of the following:
the terminal performs the predetermined operation in the first BWP, or switches from the second BWP to the first BWP;
the second BWP cannot be used for performing the predetermined operation or switching from the first BWP to the second BWP;
the load of the current cell or the first BWP is lower than the fifth preset threshold;
the current cell or the first BWP supports the type of the terminal;
the terminal performs cell selection or reselection based on the measurement performance of the CD SSB of the first BWP;
the R criterion used by the terminal to perform selection or reselection based on the measurement performance of the CD SSB of the first BWP;
the S criterion used by the terminal to perform selection or reselection based on the measurement performance of the CD SSB of the first BWP; and
the measurement performance of the current cell cannot be determined based on the measurement performance of the NCD SSB of the second BWP, or the measurement performance of the NCD SSB of the second BWP cannot represent the measurement performance of the current cell, or the measurement performance of the NCD SSB of the second BWP cannot replace the measurement performance of the CD SSB of the first BWP.

In some embodiments, in a case that the terminal is in the connected state, the second indication is sent through the RRC message; and
in a case that the terminal is in the idle state or the inactive state, the second indication is sent through at least one of the following messages: the broadcast system message, the paging message, the paging advance indication message, and the dedicated RRC message.

An embodiment of the present application further provides a readable storage medium, storing a program or instructions. The program or the instructions, when executed by a processor, implements all processes of the foregoing BWP switching method embodiments, and can achieve the same technical effects. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of the present application further provides a chip, including a processor and a communication interface, where the communication interface is coupled to the processor, and the processor is configured to run a program or instructions, to implement all processes of the foregoing BWP switching method embodiments, and can achieve the same technical effects. To avoid repetition, details are not described herein again.

It should be understood that, the chip described in embodiments of the present application may also be referred to as a system-level chip, a system chip, a chip system, a system on chip, or the like.

An embodiment of the present application further provides a computer program product, where the computer program product is stored in a storage medium and executed by at least one processor to implement all processes of the foregoing BWP switching method embodiments, and can achieve the same technical effects. To avoid repetition, details are not described herein again.

An embodiment of the present application further provides a BWP switching system. The system includes: a network side device and a terminal, and the terminal may be configured to perform steps of the BWP switching method above.

It should be noted that in this specification, "include", "comprise", and any variants are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. Without more limitations, elements defined by the sentence "including one" do not exclude that there are still other same elements in the processes, methods, objects, or apparatuses. In addition, it should be pointed out that the scope of the methods and apparatuses in embodiments of the present application is not limited to performing the functions in the order shown or discussed, but also can include performing the functions in basically the same way or in the opposite order according to the functions involved, for example, the described methods can be performed in a different order from the described ones, and various steps can also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in the present application essentially or the part contributing to the reflected technologies may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in embodiments of the present application.

Embodiments of the present application are described above with reference to the accompanying drawings, but the present application is not limited to the foregoing specific embodiments, which are merely illustrative rather than limited. Under the inspiration of the present application, a person of ordinary skill in the art may make various variations without departing from the scope of the present application and the protection of the claims, and such variations shall fall within the protection of the present application.

## Claims

1. A bandwidth part BWP switching method, comprising:
in a case that a first preset condition is met, performing, by a terminal, a predetermined operation in a second BWP, or switching from a first BWP to the second BWP, wherein
the first BWP is an initial BWP, and the second BWP is a separate initial BWP; and
the performing a predetermined operation comprises at least one of the following:
receiving a system message;
receiving or monitoring a paging message;
receiving or monitoring an advance indication signal;
performing a random access process;
performing radio resource management RRM measurement;
performing radio link monitoring RLM and/or beam failure detection BFD; and
performing cell selection or reselection.

2. The method according to claim 1, wherein before the performing, by a terminal, a predetermined operation in a second BWP, or switching from a first BWP to the second BWP, the method further comprises:
receiving, by the terminal, configuration information of a non-cell defining synchronization signal and PBCH block NCD SSB of the second BWP from a network side device.

3. The method according to claim 1, wherein before the performing, by a terminal, a predetermined operation in a second BWP, the method further comprises:
performing the predetermined operation in the first BWP.

4. The method according to any one of claims 1 to 3, wherein the first preset condition comprises at least one of the following:
the configuration information of the NCD SSB or the second BWP is received from a first network side device;
a bandwidth of the first BWP exceeds a bandwidth of the terminal;
a carrier bandwidth, a channel bandwidth, or a system bandwidth exceeds the bandwidth of the terminal;
a bandwidth of the second BWP is less than or equal to the bandwidth of the terminal;
measurement performance of the first BWP is lower than or equal to a first preset threshold;
measurement performance of the second BWP is higher than or equal to a second preset threshold;
measurement performance of the terminal in a current cell is higher than a third preset threshold;
measurement performance of the terminal in a neighboring cell is lower than a fourth preset threshold;
the terminal is in a center of a cell or not at an edge of a cell;
the terminal meets an S-measure mechanism;
the terminal does not enable neighboring cell measurement;
a second network side device sends the NCD SSB in the second BWP, and the second network side device is a network side device corresponding to the neighboring cell;
the terminal performs cell selection or reselection;
the terminal is in low mobility or a stationary state;
a random number corresponding to the terminal is within a preset range;
a specific reference signal exists in the second BWP; and
a first indication of the first network side device is received.

5. The method according to claim 4, wherein the method further comprises:
receiving a third indication of the first network side device, wherein the third indication indicates the first preset condition.

6. The method according to claim 4, wherein the first indication indicates at least one of the following:
the terminal performs the predetermined operation in the second BWP, or switches from the first BWP to the second BWP;
the second BWP can be used for performing the predetermined operation or switching from the first BWP to the second BWP;
a load of the current cell or the first BWP is higher than a fifth preset threshold;
the current cell or the first BWP does not support a type of the terminal;
the terminal performs cell selection or reselection based on measurement performance of the NCD SSB of the second BWP;
the terminal performs cell selection or reselection based on the measurement performance of the NCD SSB of the second BWP and measurement performance of a cell defining synchronization signal and PBCH block CD SSB of the first BWP;
an R criterion used by the terminal to perform selection or reselection based on the measurement performance of the NCD SSB of the second BWP;
an S criterion used by the terminal to perform selection or reselection based on the measurement performance of the NCD SSB of the second BWP; and
the measurement performance of the current cell is determined based on the measurement performance of the NCD SSB of the second BWP, or the measurement performance of the NCD SSB of the second BWP can represent the measurement performance of the current cell, or the measurement performance of the NCD SSB of the second BWP can replace the measurement performance of the CD SSB of the first BWP.

7. The method according to claim 4, wherein the bandwidth of the terminal comprises at least one of the following:
a bandwidth supported by the terminal;
a channel bandwidth of the terminal; and
a BWP bandwidth supported by the terminal; and/or
the bandwidth of the first BWP comprises at least one of the following:
a bandwidth, a minimum bandwidth, or a maximum bandwidth configured for the first BWP;
a system bandwidth configured for the first BWP; and
a channel bandwidth configured for the first BWP; and/or
the bandwidth of the second BWP comprises at least one of the following:
a bandwidth, a minimum bandwidth, or a maximum bandwidth configured for the second BWP;
a system bandwidth configured for the second BWP; and
a channel bandwidth configured for the second BWP.

8. The method according to claim 4, wherein the carrier bandwidth, the channel bandwidth, or the system bandwidth is configured by the network side device or agreed on in a protocol.

9. The method according to claim 4, wherein that the terminal is in low mobility or a stationary state comprises at least one of the following:
a measurement performance change amount of the terminal in the current cell is less than a sixth preset threshold or a first reference threshold;
a beam measurement change amount of the terminal in the current cell is less than a seventh preset threshold or a second reference threshold; and
a number of beams whose beam measurement change amount of the terminal in the current cell is greater than the seventh preset threshold is less than an eighth preset threshold.

10. The method according to claim 4, wherein
in a case that the terminal is in a connected state, the first indication is sent through a radio resource control RRC message; and
in a case that the terminal is in an idle state or an inactive state, the first indication is sent through at least one of the following messages: a broadcast system message, a paging message, a paging advance indication message, and a dedicated RRC message.

11. The method according to claim 4, wherein the configuration information of the NCD SSB or the second BWP comprises at least one of the following:
transmit power information of the NCD SSB, comprising a transmit power of the NCD SSB and/or a transmit power difference between the NCD SSB and the CD SSB;
time domain information of the NCD SSB, comprising a time domain location of the NCD SSB and/or time synchronization information of the NCD SSB and the CD SSB;
frequency domain information of the NCD SSB, comprising a frequency domain location of the NCD SSB and/or a frequency domain location difference between the NCD SSB and the CD SSB;
a quasi-co-location relationship between the NCD SSB and the CD SSB; and
a measurement periodicity and a length SMTC corresponding to the NCD SSB.

12. The method according to any one of claims 1 to 3 and claims 5 to 11, further comprising:
in a case that a second preset condition is met, performing the predetermined operation in the first BWP, or switching from the second BWP to the first BWP.

13. The method according to claim 12, wherein the second preset condition comprises at least one of the following:
the configuration information of the NCD SSB or the second BWP is not received from the first network side device;
the bandwidth of the first BWP does not exceed the bandwidth of the terminal;
the carrier bandwidth, the channel bandwidth, or the system bandwidth does not exceed the bandwidth of the terminal;
the bandwidth of the first BWP is less than or equal to the bandwidth of the terminal;
the measurement performance of the second BWP is lower than or equal to a ninth preset threshold;
the measurement performance of the first BWP is higher than or equal to a tenth preset threshold;
the measurement performance of the terminal in the current cell is lower than an eleventh preset threshold;
the measurement performance of the terminal in the neighboring cell is higher than a twelfth preset threshold;
the terminal is at the edge of the cell or not in the center of the cell;
the terminal does not meet the S-measure mechanism;
the second network side device does not send the NCD SSB in the second BWP, and the second network side device is a network side device corresponding to the neighboring cell;
the terminal enables the neighboring cell measurement;
the terminal is not in the low mobility or the stationary state, or the terminal is in medium to high mobility;
the random number corresponding to the terminal is not within the preset range;
the specific reference signal does not exist in the second BWP; and
a second indication of the first network side device is received.

14. The method according to claim 13, wherein that the terminal is in medium to high mobility comprises at least one of the following:
the measurement performance change amount of the terminal in the current cell is greater than a sixteenth preset threshold or the first reference threshold;
the beam measurement change amount of the terminal in the current cell is greater than a seventeenth preset threshold or the second reference threshold; and
a number of beams whose beam measurement change amount of the terminal in the current cell is greater than the seventeenth preset threshold is greater than an eighteenth preset threshold.

15. The method according to claim 13, wherein the second indication indicates at least one of the following:
the terminal performs the predetermined operation in the first BWP, or switches from the second BWP to the first BWP;
the second BWP cannot be used for performing the predetermined operation or switching from the first BWP to the second BWP;
the load of the current cell or the first BWP is lower than the fifth preset threshold;
the current cell or the first BWP supports the type of the terminal;
the terminal performs cell selection or reselection based on the measurement performance of the CD SSB of the first BWP;
the R criterion used by the terminal to perform selection or reselection based on the measurement performance of the CD SSB of the second BWP;
the S criterion used by the terminal to perform selection or reselection based on the measurement performance of the CD SSB of the second BWP; and
the measurement performance of the current cell cannot be determined based on the measurement performance of the NCD SSB of the second BWP, or the measurement performance of the NCD SSB of the second BWP cannot represent the measurement performance of the current cell, or the measurement performance of the NCD SSB of the second BWP cannot replace the measurement performance of the CD SSB of the first BWP.

16. The method according to claim 13, wherein
in a case that the terminal is in the connected state, the second indication is sent through the RRC message; and
in a case that the terminal is in the idle state or the inactive state, the second indication is sent through at least one of the following messages: the broadcast system message, the paging message, the paging advance indication message, and the dedicated RRC message.

17. A bandwidth part BWP switching apparatus, comprising:
a processing module, configured to: in a case that a first preset condition is met, perform a predetermined operation in a second BWP, or switch from a first BWP to the second BWP, wherein
the first BWP is an initial BWP, and the second BWP is a separate initial BWP; and
the performing a predetermined operation comprises at least one of the following:
receiving a system message;
receiving or monitoring a paging message;
receiving or monitoring an advance indication signal;
performing a random access process;
performing radio resource management RRM measurement;
performing radio link monitoring RLM and/or beam failure detection BFD; and
performing cell selection or reselection.

18. The apparatus according to claim 17, wherein
the processing module is further configured to in a case that a second preset condition is met, perform the predetermined operation in the first BWP, or switch from the second BWP to the first BWP.

19. A terminal, comprising a processor and a memory, wherein the memory stores a program or instructions running on the processor, and the program or the instructions, when executed by the processor, implements steps of the BWP switching method according to any one of claims 1 to 16.

20. A readable storage medium, wherein the readable storage medium stores a program or instructions, and the program or the instructions, when executed by a processor, implements steps of the BWP switching method according to any one of claims 1 to 16.

21. A chip, comprising a processor and a communication interface, wherein the communication interface is coupled to the processor, and the processor is configured to run a program or instructions, to implement steps of the BWP switching method according to any one of claims 1 to 16.

22. A computer program product, wherein the computer program product is stored in a storage medium, and the computer program product is executed by at least one processor to implement steps of the BWP switching method according to any one of claims 1 to 16.

23. A communication device, configured to perform steps of the BWP switching method according to any one of claims 1 to 16.
